# EUROPEAN PATENT SPECIFICATION

(11) **EP 0 497 063 B1**
(45) Date of publication and mention of the grant of the patent: **15.03.1995**
(21) Application number: 91400209.2
(22) Date of filing: 29.01.1991
(51) Int. Cl.: B60R 25/02

(54) **Steering lock apparatus**
Lenkschlossvorrichtung
Appareil de verrouillage de direction

(43) Date of publication of application: 05.08.1992
(73) Proprietor: VALEO SECURITE HABITACLE, 78290 Croissy-Sur-Seine (FR); INSTITUT MINORU DE RECHERCHE AVANCEE, 06560 Valbonne (FR); AISIN SEIKI KABUSHIKI KAISHA, Kariya City, Aichi-Ken 448 (JP); REGIE NATIONALE DES USINES RENAULT S.A., 92109 Boulogne Billancourt (FR)
(72) Inventor: Thiéry, Alain, F-92130 Issy-les-Moulineaux (FR); Ishikawa, Masanobu, Kariya-shi, Aichi 488 (JP); Laville, François, F-78740 Evecquemont (FR); Mitsuta, Tatsumi, F-06560 Valbonne (FR)
(74) Representative: Ernst-Schonberg, Michel

(56) References cited:
- WO-A-89/09149
- US-A- 4 907 427
- PATENT ABSTRACTS OF JAPAN, vol. 12, no. 137 (M-690), 26 April 1988; & JP-A-62 258 860 (AISIN SEIKI) 11 November 1987

## Description

The present invention relates to a steering lock apparatus capable of locking a steering wheel, thereby preventing a vehicle being stolen and the like.

As for this type of a steering lock apparatus, a steering lock apparatus disclosed in Unexamined Japanese Patent Publication JP-A-62 258860 has been known so far. The steering lock apparatus has a fixed bracket fixed on a vehicle, a shaft holding a steering wheel at one end thereof and disposed in the fixed bracket in a manner relatively movable in the axial direction thereof and in a manner relatively rotatable, a driving mechanism disposed on the fixed bracket for moving the shaft relatively, wherein an outer serration is formed on the outer periphery portion of the shaft at the other end thereof and an inner serration is formed on the inner periphery of the fixed bracket in a manner capable of meshing with the outer serration.

In the conventional steering lock apparatus, when the driving mechanism is actuated, the shaft moves together with the steering wheel in the axial direction thereof to the vehicle front with respect to the fixed bracket. Accordingly, the outer serration of the shaft enters into and meshes with the inner serration of the fixed bracket, whereby the shaft is made unrotatable and putting the shaft and the steering wheel into a lock condition. Further, when the driving mechanism is actuated in the direction opposite to the aforementioned direction, the shaft moves together with the steering wheel in the axial direction thereof to the vehicle rear with respect to the fixed bracket. Accordingly, the outer serration of the shaft is removed from inner serration of the fixed bracket and the mesh is disengaged, whereby the shaft is made rotatable and putting the shaft and the steering wheel into an unlock condition.

In the above-mentioned steering lock apparatus, however, when the driving mechanism malfunctions due to a failure control circuit of the driving mechanism, the inner serration and the outer serration is meshed by the relative movement of the shaft. Accordingly, there is a fear for causing unexpected things to an unprepared driver.

It is therefore an engineering assignment to the present invention to completely remove the fear for putting the steering wheel into the lock state due to the malfunctions of the driving mechanism.

In the present invention, the following engineering means are devised in order to achieve the above-mentioned engineering assignment. The engineering means are adapted for a steering lock apparatus comprising:
a base portion fixed on a vehicle body;
a steering shaft member held by the base portion so as to be relatively movable in the axial direction thereof and relatively rotatable ;
a first driving mechanism disposed on the base portion for carrying out the relative axial movement of the shaft member ;
a first grooved portion formed on the base portion, having a number of grooves extending in the axial direction and equally spaced over the circumference of the base member;
a second grooved portion formed on the steering shaft member , having a number of grooves extending in the axial direction, and equally spaced over the cir cumference of the steering shaft member, so that said second grooved portion may be put into mesh with said first grooved portion , thereby preventing relative rotation between the steering shaft member and the base portion;
wherein the first grooved portion and the second grooved portion are put into mesh by said relative axial movement of the steering shaft member
The engineering means is featured by an arrangement comprising the following:
a shielding member axially positioned between the first grooved portion and the second grooved portion when they are out of mesh and which may be moved between a first position enabling the first grooved portion to mesh with the second grooved portion and a second position preventing the first grooved portion from meshing with the second grooved portion
a biasing means for biasing the shielding member towards said second position;
a second driving mechanism disposed on the base portion for operating the shielding member towards said first position against the bias of said biasing means.

The above-mentioned engineering means operates as follows: The shielding member always shields between the first grooved portion and the second grooved portion. Only when the second driving mechanism are actuated, the shielding member releases between the first grooved portion and the second grooved portion, thereby putting the first grooved portion and the second grooved portion into an engageable state. In this way, even when the first driving mechanism malfunctions, the first grooved portion and the second grooved portion do not mesh, thereby enabling to completely eliminate the fear for putting the steering shaft member, namely the steering wheel, into the lock state due to the malfunctions of the driving mechanism.

A preferred embodiment of the present invention will be hereinafter described with reference to the accompanying drawings.

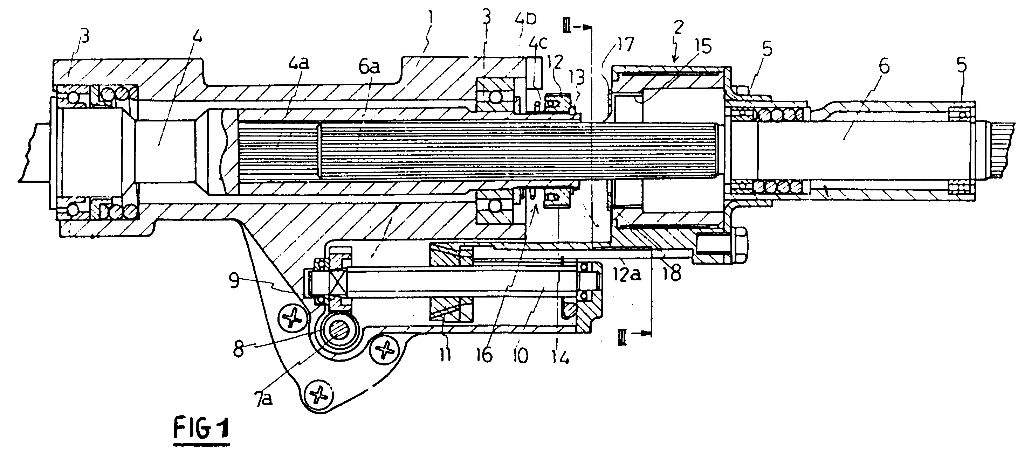

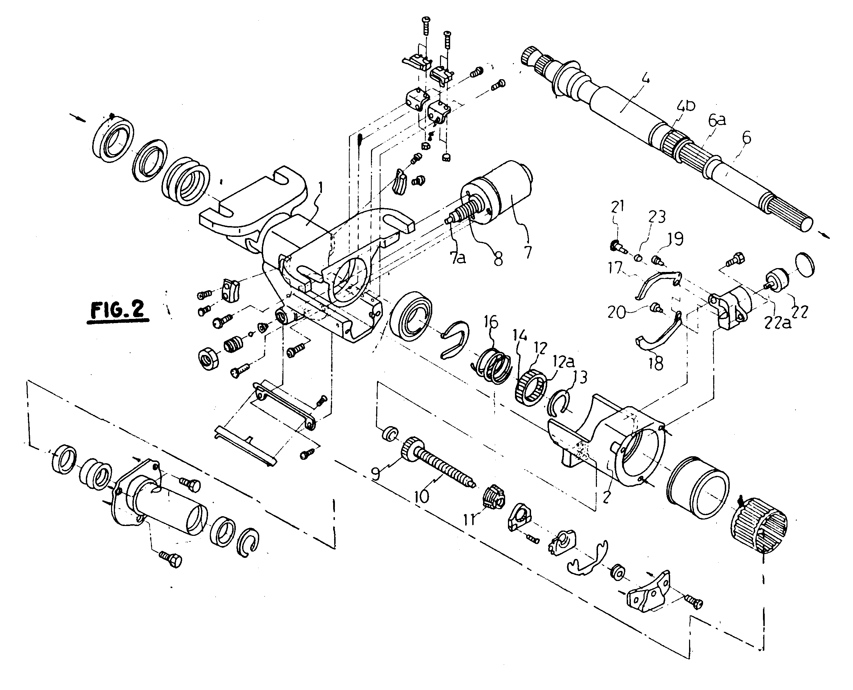

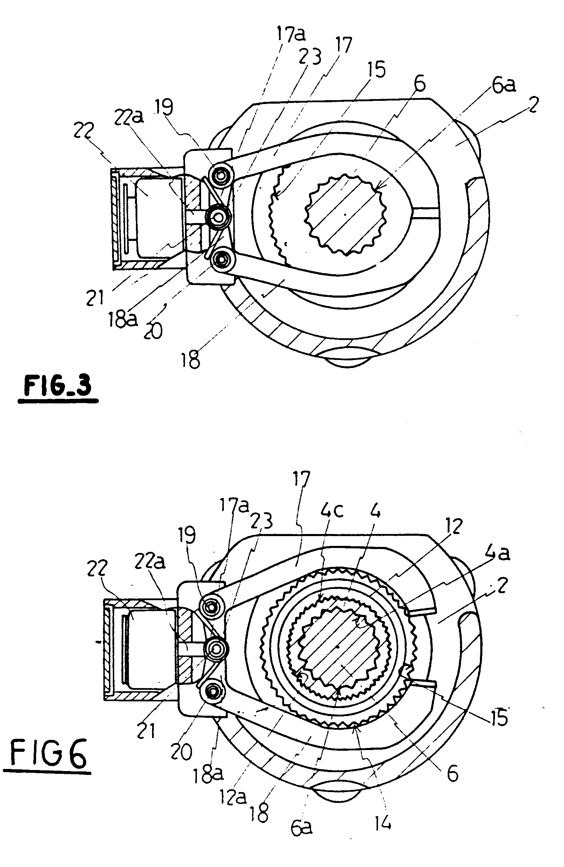

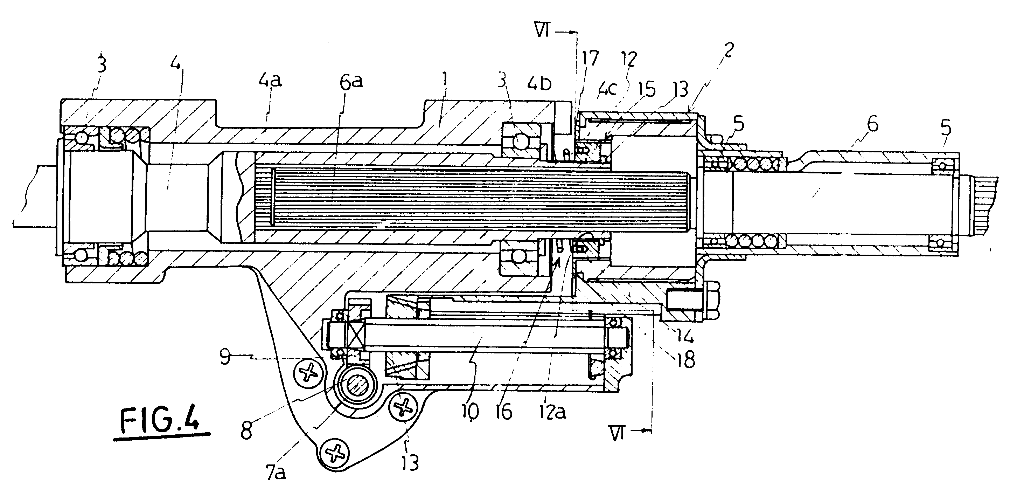

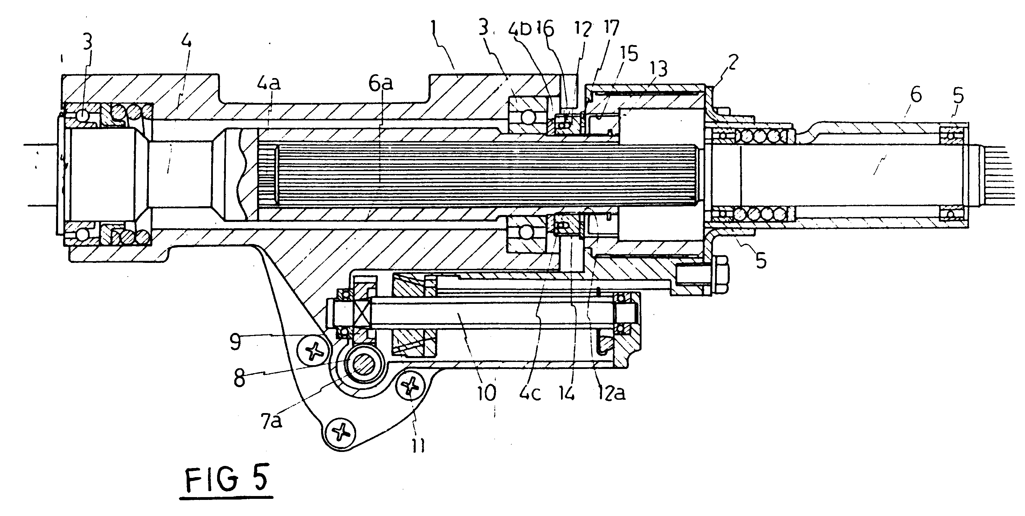

Figure 1 is a cross sectional view of a steering lock apparatus according to the present invention. Figure 2 is an exploded view of the steering lock apparatus illustrated in Figure 1. Figure 3 is a cross sectional view taken along the line III-III in Figure 1. Figure 4 is a cross sectional view corresponding to Figure 1 and illustrating a state of the steering lock apparatus in which the first driving means is actuated under the circumstance that the second driving mechanism is actuated. Figure 5 is a cross sectional view corresponding to Figure 1 and illustrating a state of the steering lock apparatus in which the first driving means is actuated under the circumstance that the second driving mechanism is not actuated. Figure 6 is a cross sectional view taken along the line VI-VI in Figure 4.

As Illustrated in Figures 1 and 2, in a fixed base portion 1 to be fixed on a vehicle body, a movable bracket 2 is held in a manner relatively movable in the axial direction thereof and in a manner relatively rotatable. Further, in the fixed base portion 1, a fixed shaft 4 is held in a manner rotatable by way of a bearing 3, and in the movable bracket 2, a movable steering shaft member 6 with a steering wheel (not shown) fixed at the end thereof is held by way of a bearing 5. On the inner periphery of the fixed shaft 4, an inner serration 4a is formed and extends in the axial direction thereof. On the outer periphery of the movable steering shaft member 6, an outer serration 6a engageable with the inner serration 4a is formed and extends in the axial direction thereof. By meshing the inner serration 4a and the outer serration 6a, the movable shaft member 6 is joined to the fixed shaft 4 in a manner relatively movable in the axial direction thereof and in a manner intregrally rotatable. Thus, the movable bracket 2 and the movable steering shaft member 6 are made movable in the axial direction thereof with respect to the fixed bas portion 1 and the fixed shaft 4.

On the fixed base portion 1, a motor 7 or first driving mechanism is fixed.

Further, on a rotary shaft 7a of the motor 7, a screw shaft 10 is joined thereto by way of a worm gear 8 and a worm wheel gear 9 which is held detachably to the fixed base portion in a manner relatively movable but unrotatable in the axial direction thereof. Furthermore, a nut member 11 fixed on the movable bracket 2 is screwed on the screw shaft 10.

On the outer periphery adjacent to the front end of the fixed shaft 4, a C-ring 4b is fixed, and a lock block 12 is disposed between the C-ring 4b and the front end of the fixed shaft 4 in a manner being prevented from coming off by a C-ring 13. On the outer periphery of the fixed shaft 4 between the C-ring 4b and the front end thereof, an outer serration 4c is formed and extends in the axial direction thereof, and, on the inner periphery of the lock block 12, an inner serration 12a engageable with the outer serration 4c is formed and extends in the axial direction. By meshing the outer serration 4c and the inner serration 12a, the lock block 12 is held by the fixed shaft 4 in a manner relatively movable and in a manner integrally rotatable therewith.

A first grooved portion (15) or inner serration formed on the base portion (1), has a number of grooves extending in the axial direction and equally spaced over the circumference of the base number ; A second grooved portion (14) or outer serration formed on the steering shaft member (6) has a number of grooves extending in the axial direction, and equally spaced over the circumference of the steering shaft member, so that said second grooved portion may be put into mesh with said first grooved portion (15), thereby preventing relative rotation between the steering shaft member (6) and the base portion. The first grooved portion (14) and the second grooved portion (15) are put into mesh by said relative axial movement of the steering shaft member (6). In addition, a spring 16 disposed around the fixed shaft 4 is installed between the C-ring 4b and the lock block 12. The lock block 12 is always urged by the urging force of the spring 16 in the direction putting the outer serration 14 and the inner serration 15 in mesh.

As illustred in Figures 3 and 6, shielding member comprising two levers 17, 18 for shielding the inner serration 15 are held on the movable bracket 2 by pins 19 and 20 rotatably. The shielding member (17, 18) is axially positionned between the inner serration (15) and he outer serration (14) when they an out of mesh. The shielding member 17, 18 have a letter "L" shape substantially, and a pin 21 is engaged between operating arms 17a and 18a facing each other. Further, the pin 21 is engaged with an operating shaft 22a of second driving mechanism as a solenoid 22. Furthermore, biasing means as spring 23 is disposed around the pin 21, and engaged with the shielding member 17, 18 at the ends thereof. Thus, the spring 23 always urges the shielding member 17, 18 so it they shields the inner serration 15.

The operation of the steering lock apparatus thus arranged will be hereinafter described.

The state illustrated in Figure 1 is an unlock state of the steering lock apparatus, in which the steering wheel is rotatable. Further, as illustrated in Figure 3, the inner serration 15 of the movable bracket 2 is shielded by the shielding levers 17 and 18 which are urged by the urging force of the spring 23. Under the circumstance, when the motor 7 is actuated, the screw shaft 10 is rotated by way of the worm gear 8 and the worm wheel gear 9. Since the nut member 11 holds the screw shaft 10 detachably in a manner unmovable in the axial direction thereof, the nut member 11 is moved by the rotation of the screw shaft 10 in the direction "A" shown in Figure 1, thereby moving the movable bracket 2 together with the steering shaft member in the direction "A" shown in Figure 1. When the solenoid 22 is turned on and actuated at this moment, the pin 21 is pressed by the operating shaft 22a of the solenoid 22 and the shielding levers 17 and 18 are rotated against the urging force of the spring 23, thereby releasing the inner serration 15 of the movable bracket 2 as illustrated in Figure 6. Thus, as illustrated in Figure 4, the inner serration 15 of the movable bracket 2 meshes with the outer serration 14 of the lock block 12. As a result, the steering wheel is put into the lock state in which it is unrotatable. In addition, when the solenoid 22 is turned off, as illustrated in Figure 3, the inner serration 15 of the movable bracket 2 are kept shielded by the shielding levers 17 and 18 which are urged by the urging force of the spring 23. Thus, as illustrated in Figure 5, the inner serration 15 of the movable bracket 2 does not mesh with the outer serration 14 of the lock block 12, thereby keeping the steering wheel in the unlock state.

As having been described so far, the inner serration 15 of the movable bracket 2 is shielded by the shielding levers 17, and 18, and is always in the unmeshable state. Since the inner serration 15 of the movable bracket 2 is released and put into the meshable state only when the solenoid 22 is actuated, the inner serration 15 of the movable bracket 2 does not mesh with the outer serration 14 of the lock ring 12 unless the solenoid 22 is actuated. Accordingly, the inner serration 15 does not mesh with the outer serration 14 even when the motor 7 is malactuated due to the control circuit failure and the like and the steering wheel can be completely prevented from being locked due to the malactuation of the motor 7. Thus, the steering wheel is prevented from being locked by malactuating the motor 7 carelessly, and there occurs nothing resulting in unexpected things to a driver.

Moreover, in the case that the actuation of the solenoid 22 is interlocked with the key inserting and removing operation for starting a vehicle engine and that the solenoid 22 is actuated only when the key is removed and the motor 7 is actuated, the locking of the steering wheel due to the malactuation of the motor 7 can be prevented from happening while a vehicle is travelling. Thus, the safety during travelling can be secured. At the same time, since the solenoid 22 is actuated only when a driver intends to put the steering wheel into the lock state, the solenoid 22 generates less heat. Accordingly, the solenoid 22 can be made into a down-sized one and a very advantageous one for a practical application
Consequently, the shielding member shields between the first grooved portion and the second grooved portion, and the first grooved portion and the second grooved portion are put into an unmeshable state. The shielding member can release between the first grooved portion and the second grooved portion only when the second driving mechanism are actuated. Thus, even when the first driving mechanism is malactuated by accident, the first grooved portion and the second grooved portion do not mesh each other, and the fear for putting the shaft member, namely a steering wheel, into the lock state due to the malfunction of the first driving mechanism can be eliminated completely. Therefore, there is no fear for causing unexpected things to a driver.

## Claims

1. A steering lock apparatus comprising :
a base portion (1) fixed on a vehicle body ;
a steering shaft member (6) held by the base portion (1) so as to be relatively movable in the axial direction thereof and relatively rotatable ;
a first driving mechanism (7) disposed on the base portion (1) for carrying out the relative axial movement of the shaft member (6) ;
a first grooved portion (15) formed on the base portion, having a number of grooves extending in the axial direction and equally spaced over the circumference of the base member;
a second grooved portion (14) formed on the steering shaft member (6), having a number of grooves extending in the axial direction, and equally spaced over the circumference of the steering shaft member, so that said second grooved portion may be put into mesh with said first grooved portion (15), thereby preventing relative rotation between the steering shaft member (6) and the base portion;
wherein the first grooved portion (14) and the second grooved portion (15) are put into mesh by said relative axial movement of the steering shaft member (6);
said steering lock apparatus being characterized in that it further comprises:
a shielding member (17, 18) axially positioned between the first grooved portion (15) and the second grooved portion when they are out of mesh and which may be moved between a first position enabling the first grooved portion (15) to mesh with the second grooved portion (14) and a second position preventing the first grooved portion (15) from meshing with the second grooved portion (14);
a biasing means (23) for biasing the shielding member (17, 18) towards said second position;
a second driving mechanism (22) disposed on the base portion (1) for operating the shielding member (17, 18) towards said first position against the bias of said biasing means.

## Patentansprüche

1. Verriegelungsvorrichtung für eine Lenksäule, die aufweist:
ein an dem Kraftfahrzeugaufbau befestigtes Grundteil (1), einen Lenksäulenabschnitt (6), der am Grundteil (1) derart gelagert ist, daß er in axialer Richtung verschiebbar und relativ verdrehbar ist,
einen ersten Antriebsmechanismus (7), der am Grundteil (1) vorgesehen ist zur Durchfuhrung der relativen Axialverschiebung des Säulenabschnitts (6),
einen ersten mit Nuten versehenen Abschnitt (15) am Grundteil mit einer Anzahl von Nuten, die sich in Axialrichtung erstrecken und im gleichen Abstand voneinander über den Umfang des Grundteilabschnitts verteilt sind,
einen zweiten mit Nuten versehenen Abschnitt (14) an dem Lenksäulenabschnitt (6), mit einer Anzahl von Nuten, die sich in Axialrichtung erstrecken und im gleichen Abstand voneinander über den Umfang des Lenksäulenabschnitts dergestalt verteilt sind, daß der zweite mit Nuten versehene Abschnitt in den ersten mit Nuten versehenen Abschnitt (15) eingreifen kann, um so eine Relativverdrehung des Lenksäulenabschnitts (6) bezüglich des Grundteils zu verhindern,
wobei das Eingreifen des ersten mit Nuten versehenen Abschnitts (15) und des zweiten mit Nuten versehenen Abschnitts (14) ineinander durch die relative Axialverschiebung des Lenksäulenabschnitts (6) erfolgt,
dadurch gekennzeichnet, daß die Verriegelungsvorrichtung für die Lenksäule ferner aufweist:
ein Schutzteil (17, 18), das in Axialrichtung zwischen dem ersten mit Nuten versehenen Abschnitt (15) und dem zweiten mit Nuten versehenen Abschnitt angeordnet ist, sofern sich die beiden Abschnitte außer Eingriff miteinander befinden und das zwischen einer ersten Stellung, in der das Eingreifen des ersten mit Nuten versehenen Abschnitts (15) in den zweiten mit Nuten versehenen Abschnitt (14) ermöglicht wird und einer zweiten Stellung, in der das Eingreifen des ersten mit Nuten versehenen Abschnitts (15) in den zweiten mit Nuten versehenen Abschnitt (14) verhindert wird, bewegbar ist,
eine eine Vorspannung erzeugende Anordnung (23), welche das Schutzteil (17, 18) in Richtung der zweiten Stellung beaufschlagt und
einen zweiten Antriebsmechanismus (22), der am Grundteil (1) angeordnet ist, zur Betätigung des Schutzteils (17, 18) in Richtung der ersten Stellung, entgegen der Beaufschlagung durch die die Vorspannung erzeugende Anordnung.

## Revendications

1. Appareil de verrouillage de direction comportant:
une partie (1) formant base fixée sur un châssis de véhicule;
un élément (6) formant arbre de direction supporté par la partie (1) formant base de manière à pouvoir se déplacer par rapport à celle-ci dans sa direction axiale et à pouvoir tourner par rapport à celle-ci;
un premier mécanisme d'entraînement (7) disposé sur la partie (1) formant base pour réaliser le déplacement axial relatif de l'élément (6) formant arbre;
une première partie rainurée (15) formée sur la partie formant base, comportant plusieurs rainures s'étendant dans la direction axiale et agencées de manière régulièrement espacée sur la circonférence de l'élément formant base;
une seconde partie rainurée (14) formée sur l'élément (6) formant arbre de direction, comportant plusieurs rainures s'étendant dans la direction axiale, et agencées de manière régulièrement espacée sur la circonférence de l'élément formant arbre de direction, de sorte que ladite seconde partie rainurée peut venir engrener avec ladite première partie rainurée (15), en empêchant par conséquent une rotation relative entre l'élément (16) formant arbre de direction et la partie formant base;
dans lequel la première partie rainurée (14) et la seconde partie rainurée (15) sont mises en engrènement par l'intermédiaire dudit déplacement axial relatif de l'élément formant arbre de direction.
ledit appareil de verrouillage de direction étant caractérisé en ce qu'il comporte en outre:
un élément de protection (17, 18) positionné axialement entre la première partie rainurée (15) et la seconde partie rainurée lorsque celles-ci ne sont pas mutuellement engrenées et qui peut être déplacé entre une première position permettant à la première partie rainurée (15) d'engrener avec la seconde partie rainurée (14) et une seconde position empêchant la première partie rainurée (15) d'engrener avec la seconde partie rainurée (14).
des moyens de rappel (23) pour rappeler l'élément de protection (17, 18) vers ladite seconde position;
un second mécanisme d'entraînement (22) disposé sur la partie (1) formant base pour actionner l'élément de protection (17, 18) vers ladite première position à l'encontre du rappel exercé par lesdits moyens de rappel.
